# EUROPÄISCHE PATENTANMELDUNG

(11) **EP 2 692 494 A1**
(43) Veröffentlichungstag der Anmeldung: **05.02.2014**
(21) Anmeldenummer: 13003817.7
(22) Anmeldetag: 01.08.2013
(51) Int. Cl.: B27B 5/22

(54) **Vorrichtung zum Bearbeiten von Holzstücken**

(30) Priorität: 03.08.2012 DE 202012007421 U
(71) Anmelder: Südharzer Maschinenbau GmbH, 99734 Nordhausen (DE)
(72) Erfinder: Kernstock, Johann, 91522 Ansbach (DE)
(74) Vertreter: Witzany, Manfred

(57) **Zusammenfassung**

Eine Vorrichtung (1) dient zum Bearbeiten von Holzstücken (9), insbesondere von Brennholzstücken. Die Vorrichtung (1) weist mindestens ein Schutzgehäuse (3) und mindestens ein motorisch angetriebenes Bearbeitungswerkzeug (2) auf. Außerdem ist mindestens ein Trog (8) zur Aufnahme der Holzstücke (9) vorgesehen. Diesem mindestens einen Trog (8) ist mindestens ein Holzhalter (10) zugeordnet, der zwischen einer den mindestens einen Trog (8) freigebenden Beladestellung und einer das Holzstück (9) im mindestens einen Trog (8) arretierenden Fixierstellung verstellbar ist. Das mindestens eine Bearbeitungswerkzeug (2) ist außerdem zwischen einer in das mindestens eine Schutzgehäuse (3) zurückgezogenen Passivstellung und einer in den mindestens einen Trog (8) wenigstens teilweise eingreifenden Bearbeitungsstellung relativ zum mindestens einen Trog (8) verstellbar. Zur Verbesserung des Unfallschutzes weist der mindestens eine Holzhalter (10) mindestens eine Trennwand (12) auf. Diese Trennwand (12) ist in der Fixierstellung zwischen einer Bedienungsperson und dem mindestens einen Bearbeitungswerkzeug (2) vorgesehen. Das mindestens eine Bearbeitungswerkzeug (2) steht dabei mit dem mindestens einen Holzhalter (10) in Wirkverbindung.

## Beschreibung

Die Erfindung betrifft eine Vorrichtung zum Bearbeiten von Holzstücken, insbesondere von Brennholzstücken gemäß dem Oberbegriff des Patentanspruchs 1.

Aus der DE 20 2010 017 503 U1 ist eine gattungsgemäße Vorrichtung bekannt. Diese Vorrichtung weist ein motorisch angetriebenes Bearbeitungswerkzeug in Form eines Sägeblattes auf. Dieses Sägeblatt dient zum Sägen von Holzstücken, insbesondere Brennholzstücken. Diese Holzstücke sind in einem Trog vorgesehen, der relativ zum Sägeblatt verschwenkbar ausgebildet ist. Dem Trog ist außerdem ein Holzhalter zugeordnet, der das Holzstück während der Bearbeitung durch das Sägeblatt festhält. Diese Vorrichtung hat sich in der Praxis bewährt und bildet den Ausgangspunkt der vorliegenden Erfindung.

Der Erfindung liegt die Aufgabe zugrunde, eine Vorrichtung der eingangs genannten Art zu schaffen, die sich durch eine verbesserte Unfallsicherheit auszeichnet.

Diese Aufgabe wird erfindungsgemäß mit den Merkmalen des Patentanspruchs 1 gelöst.

Eine Vorrichtung gemäß Anspruch 1 dient zum Bearbeiten von Holzstücken, insbesondere von Brennholzstücken. Die konkrete Bearbeitungsmethode spielt dabei keine Rolle. Diese Vorrichtung weist mindestens ein Schutzgehäuse, mindestens ein motorisch angetriebenes Bearbeitungswerkzeug, mindestens einen Trog und mindestens einen Holzhalter auf. Dieser mindestens eine Holzhalter ist zwischen einer den mindestens einen Trog freigebenden Beladungsstellung und einer das Holzstück im mindestens einen Trog arretierenden Fixierstellung verstellbar. In der Beladungsstellung ist der mindestens eine Holzhalter so weit zurückgezogen, dass der Trog problemlos mit dem Holzstück beladen werden kann. In der Fixierstellung ist dagegen das Holzstück durch den mindestens einen Holzhalter soweit arretiert, dass es sich während der Bearbeitung durch das mindestens eine Bearbeitungswerkzeug nicht oder nur noch geringfügig bewegen kann. Das mindestens eine Bearbeitungswerkzeug kann in beliebiger Weise ausgebildet sein. Insbesondere ist an Kettensägen, Kreissägen, Holzspalter, Fräsen oder Bohrer gedacht. Diese Aufzählung ist allerdings nicht abschließend zu verstehen. Da das motorisch angetriebene Bearbeitungswerkzeug ein beachtliches Gefährdungspotenzial für Bedienungspersonen aufweist, ist das mindestens eine Schutzgehäuse vorgesehen. Das mindesten eine Bearbeitungswerkzeug ist dabei zwischen einer in das mindestens eine Schutzgehäuse zurückgezogenen Passivstellung und einer in den mindestens einen Trog wenigstens teilweise eingreifenden Bearbeitungsstellung relativ zum mindestens einen Trog verstellbar. Dabei spielt es keine Rolle, ob das Bearbeitungswerkzeug gegen den feststehenden Trog, der feststehende Trog gegen das Bearbeitungswerkzeug oder beide gegeneinander verstellt werden. Entscheidend ist lediglich die Relativbewegung der genannten Teile gegeneinander. Befindet sich das mindestens eine Bearbeitungswerkzeug in der Bearbeitungsstellung, so kann das mindestens eine Schutzgehäuse dessen Berührung nicht mehr vollständig verhindern, woraus eine entsprechende Verletzungsgefährdung resultiert. Um dieses Risiko zu verringern, weist der mindestens eine Holzhalter mindestens eine in der Fixierstellung zwischen einer Bedienungsperson und dem mindestens einen Bearbeitungswerkzeug vorgesehene Trennwand auf. Diese Trennwand ist vorzugsweise fest mit dem Holzhalter verbunden. Damit verhindert der mindestens eine Holzhalter, dass die Bedienungsperson versehentlich oder absichtlich in den Arbeitsbereich des mindestens einen Bearbeitungswerkzeugs greift, was zu entsprechenden Verletzungen führen könnte. Es ist dabei nicht erforderlich, dass der mindestens eine Holzhalter den mindestens einen Trog vollständig überdeckt. Dies ist in der Regel auch nicht möglich, da die zu bearbeitenden Holzstücke weder in ihrer Form noch in ihrer Größe definiert sind. Der mindestens eine Holzhalter sollte allerdings derart ausgebildet sein, dass ein verbleibender Freiraum zwischen dem mindestens einen Trog, dem mindestens einen Holzhalter und dem zu bearbeitenden Holzstück so klein ist, dass er nicht mehr von einem Arm der Bedienungsperson durchdrungen werden kann. Ein Einführen von einem oder mehreren Fingern in diesen Zwischenraum kann relativ einfach gefahrlos gestaltet werden, indem der mindestens eine Holzhalter in ausreichendem Abstand zum mindestens einen Bearbeitungswerkzeug vorgesehen ist. Der mindestens eine Holzhalter erfüllt auf diese Weise eine Doppelfunktion, da er zum einen das zu bearbeitende Holzstück festhält und zum anderen das Verletzungsrisiko der Bedienungsperson herabsetzt. Um sicherzustellen, dass der mindestens eine Holzhalter während des Bearbeitungsvorgangs sich in der Fixierstellung befindet, steht dieser mit der mindestens einen Bearbeitungsvorrichtung in Wirkverbindung.

Zur Reduzierung der Verletzungsgefahr der Bedienungsperson ist es gemäß Anspruch 2 günstig, wenn der mindestens eine Holzhalter mit dem mindestens einen Bearbeitungswerkzeug derart in Wirkverbindung steht, dass eine Verstellung des mindestens einen angetriebenen Bearbeitungswerkzeugs in die Bearbeitungsstellung nur möglich ist, wenn sich der mindestens eine Holzhalter in der Fixierstellung befindet. Damit ist sichergestellt, dass der Bearbeitungsvorgang nur dann ausgelöst werden kann, wenn der mindestens eine Holzhalter seine Trennfunktion erfüllt. Dies kann beispielsweise durch Arretierung des mindestens einen Bearbeitungswerkzeugs in der Passivstellung erfolgen. Alternativ oder zusätzlich kann auch der Antrieb des mindestens einen Bearbeitungswerkzeugs durch den mindestens einen Holzhalter unterbrochen werden, wenn er sich nicht in seiner Fixierstellung befindet. Damit kann zwar das mindestens eine Bearbeitungswerkzeug in die Bearbeitungsstellung überführt werden, aufgrund des fehlenden Antriebs geht von diesem jedoch nur eine mäßige Verletzungsgefahr aus. Beide Techniken können auch miteinander kombiniert werden, um den Unfallschutz weiter zu verbessern.

Eine einfache Realisierung dieser Wirkverbindung ergibt sich gemäß Anspruch 3, indem der mindestens eine Holzhalter mit mindestens einem Lagesensor in Wirkverbindung steht, der die Lage des mindestens einen Holzhalters erfasst. Unter dem Begriff "Sensor" ist hierbei und im Folgenden jede beliebige Vorrichtung zur Erfassung einer mechanischen Größe zu verstehen. Sensoren sind demnach nicht auf elektrische Wandler beschränkt. Insbesondere ist daran gedacht, als Lagesensor ein Hebelgetriebe einzusetzen, welches vom mindestens einen Holzhalter angetrieben ist.

Alternativ oder zusätzlich ist es gemäß Anspruch 4 vorteilhaft, wenn der mindestens eine Holzhalter mit mindestens einem Kraftsensor in Wirkverbindung steht, der die Haltekraft des mindestens eines Holzhalters am Holzstück erfasst. Ein Kraftsensor hat gegenüber einem Lagesensor den Vorteil, dass er stets dann auslöst, wenn der mindestens eine Holzhalter das Holzstück mit entsprechender Haltekraft erfasst. Diese Maßnahme ist insbesondere unabhängig von der Größe des zu bearbeitenden Holzstücks. Bei kleinen Holzstücken wird demnach der Lagesensor erst bei tief in den mindestens einen Trog eingefahrenem mindestens einen Holzhalter auslösen, während er bei großen Holzstücken entsprechend früher auslöst. Auf diese Weise wird verhindert, dass bei der Bearbeitung kleiner Holzstücke ein entsprechend großer Freiraum zwischen dem Holzstück und dem mindestens einen Holzhalter verbleiben kann. Auch der Kraftsensor kann als rein mechanisches Getriebe ausgebildet sein.

Gemäß Anspruch 5 ist es günstig, wenn der mindestens eine Holzhalter mindestens eine Feder aufweist, über die mindestens ein Betätigungshebel mit dem mindestens einen Holzhalter gekoppelt ist. Damit können der mindestens eine Holzhalter und der mindestens eine Betätigungshebel eine beschränkte Relativbewegung gegeneinander ausführen, die von mindestens einem Lagesensor erfasst wird. Auf diese Weise ergibt sich ein einfacher mechanischer Aufbau für einen Kraftsensor, der im Wesentlichen den Federweg der mindestens einen Feder nutzt.

Gemäß Anspruch 6 ist es vorteilhaft, wenn der mindestens eine Lage- und/oder Kraftsensor über mindestens einen Schalter mit einem Antrieb des mindestens einen Bearbeitungswerkzeugs in Wirkverbindung steht. Damit lässt sich sehr einfach erreichen, dass der Antrieb des mindestens einen Betätigungswerkzeugs stillgelegt wird, wenn der mindestens eine Holzhalter nicht die Fixierstellung einnimmt. Vorzugsweise wird zusätzlich eine Information aus der Verstellbewegung des mindestens einen Bearbeitungswerkzeugs eingekoppelt, so dass das Abschalten des mindestens einen Betätigungswerkzeugs nur dann erfolgt, wenn sich der mindestens eine Holzhalter nicht in der Fixierstellung und das mindestens eine Bearbeitungswerkzeug sich nicht in der Passivstellung befinden. Damit wird dem Umstand Rechnung getragen, dass das mindestens eine Bearbeitungswerkzeug keinerlei Unfallgefahr auslösen kann, wenn es sich in der Passivstellung befindet. Damit ist die Lage des mindestens einen Holzhalters in der Passivstellung beliebig. Insbesondere bei Kreissägen als Bearbeitungswerkzeug ist das Abschalten des Antriebs nach jedem Sägevorgang ungünstig, was durch diese Maßnahme vermieden werden kann.

Alternativ oder zusätzlich kann der mindestens eine Lage- und/oder Kraftsensor gemäß Anspruch 7 auch mit mindestens einer Arretierung in Wirkverbindung stehen, die das mindestens eine Bearbeitungswerkzeug in der Passivstellung verriegelt. Auf diese Weise ist sichergestellt, dass das mindestens eine Bearbeitungswerkzeug nicht in die Bearbeitungsstellung überführt werden kann, so lange der mindestens eine Holzhalter nicht in der Fixierstellung ist. Auch hierdurch können Unfälle mit dem mindestens einen Bearbeitungswerkzeug vermieden werden.

Alternativ oder zusätzlich kann das mindestens eine Bearbeitungswerkzeug mit dem mindestens einen Holzhalter auch derart in Wirkverbindung stehen, dass der mindestens eine Holzhalter beim Verstellen des mindestens einen Bearbeitungswerkzeugs in die Bearbeitungsstellung zwangsweise in die Fixierstellung gebracht wird. In diesem Fall muss die Bedienungsperson gar nicht daran denken, den mindestens einen Holzhalter in die Fixierstellung zu überführen, da dies selbsttätig beim Bearbeitungsvorgang durch Verstellen des mindestens einen Bearbeitungswerkzeugs geschieht. Dies vereinfacht die Handhabung der Vorrichtung und vermeidet jegliches Sicherheitsrisiko.

Zur Herstellung dieser Wirkverbindung ist es gemäß Anspruch 9 günstig, wenn das mindestens eine Bearbeitungswerkzeug und/oder der mindestens eine Trog mit dem mindestens einen Holzhalter über mindestens eine Feder gekoppelt ist/sind. Diese mindestens eine Feder überträgt die Stellbewegung auf den mindestens einen Holzhalter. Sobald dieser das zu bearbeitende Holzstück erfasst, wird die Bewegung des mindestens einen Holzhalters am Holzstück gestoppt. Trotzdem ermöglicht die mindestens eine Feder die weitere Bewegung des mindestens einen Bearbeitungswerkzeugs relativ zum mindestens einen Trog bis zur Bearbeitungsstellung.

Gemäß Anspruch 10 ist es vorteilhaft, wenn die mindestens eine Feder als Gasfeder ausgebildet ist. Eine Gasfeder hat gegenüber einer Schraubenfeder den Vorteil, dass die Federkraft nahezu unabhängig von der Federstellung ist. Damit ergibt sich keine progressive Federkraft, die in der Nähe der Bearbeitungsstellung des mindestens einen Bearbeitungswerkzeugs maximal würde.

Schließlich ist es gemäß Anspruch 11 günstig, wenn die Wirkverbindung zwischen dem mindestens einen Holzhalter und dem mindestens einen Bearbeitungswerkzeug oder dem mindestens einen Trog derart ausgebildet ist, dass der mindestens eine Holzhalter bereits sicher die Fixierstellung erreicht hat, bevor das mindestens eine Bearbeitungswerkzeug das mindestens eine Schutzgehäuse verlassen hat. Auf diese Weise ist eine Berührung des laufenden mindestens einen Bearbeitungswerkzeugs unmöglich.

Der Erfindungsgegenstand wird beispielhaft anhand der Zeichnung erläutert, ohne den Schutzumfang zu beschränken.

Es zeigt:
- Figur 1: eine schematische räumliche Darstellung einer ersten Ausführungsform einer Vorrichtung zum Bearbeiten von Holzstücken in der Beladungsstellung des Holzhalters,
- Figur 2: die Darstellung gemäß Figur 1 in der Fixierstellung des Holzhalters,
- Figur 3: die Darstellung gemäß Figur 2 in der Bearbeitungsstellung des Bearbeitungswerkzeugs,
- Figur 4: eine schematische räumliche Darstellung einer zweiten Ausführungsform einer Vorrichtung zum Bearbeiten von Holzstücken in der Beladungsstellung des Holzhalters,
- Figur 5: die Darstellung gemäß Figur 4 in der Fixierstellung des Holzhalters und
- Figur 6: die Darstellung gemäß Figur 5 in der Bearbeitungsstellung des Bearbeitungswerkzeugs.

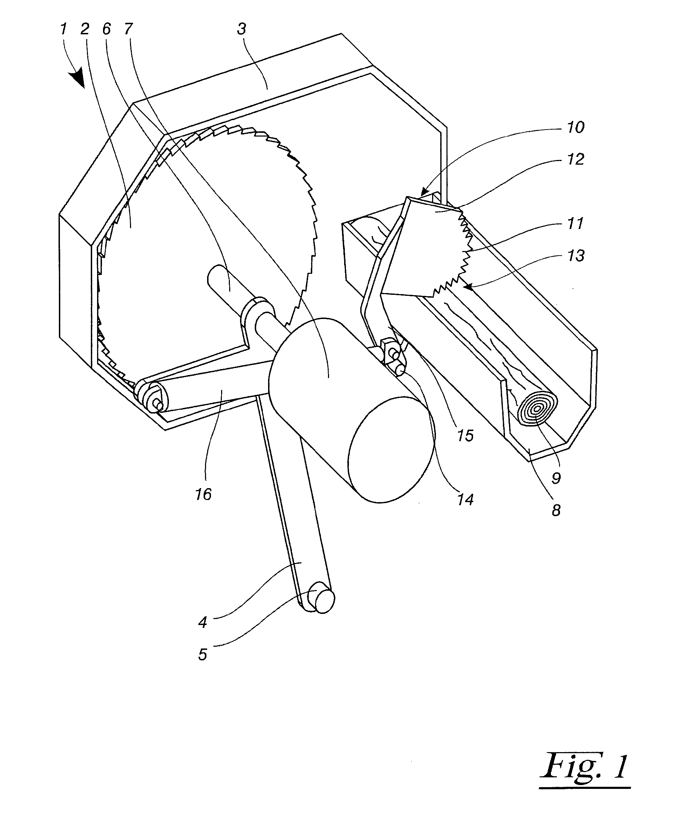

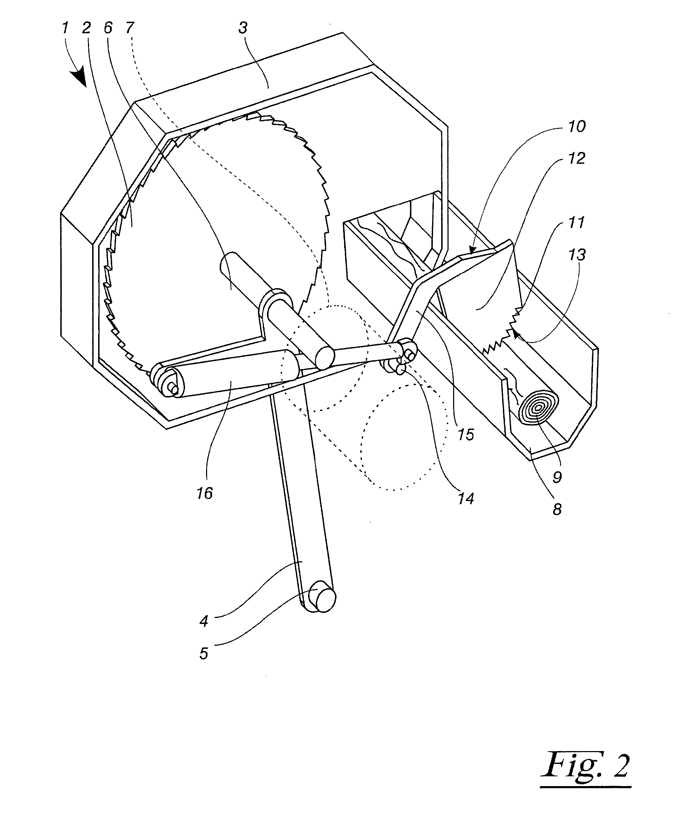

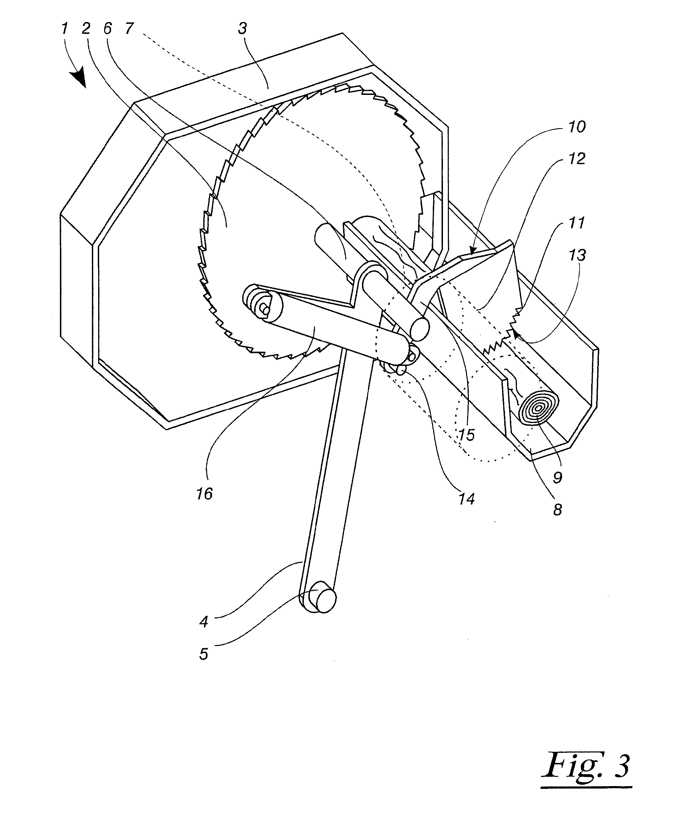

Eine Vorrichtung 1 gemäß den Figuren 1 bis 3 weist ein Bearbeitungswerkzeug 2 in Form eines Sägeblatts auf, welches in einem Schutzgehäuse 3 untergebracht ist. Das Bearbeitungswerkzeug 2 ist mittels eines Hebels 4 zwischen einer in den Figuren 1 und 2 dargestellten Passivstellung und einer in Figur 3 dargestellten Bearbeitungsstellung verstellbar. Bei der Verstellung verschwenkt der Hebel 4 mit dem Bearbeitungswerkzeug 2 um eine feste Säge-Schwenkachse 5. Um das Bearbeitungswerkzeug 2 zur Drehung anzutreiben, ist es mittels einer Welle 6 mit einem Antrieb 7 in Form eines Elektro- oder Hydraulikmotors drehmomentübertragend verbunden. Alternativ könnte auch ein Zapfwellenanschluss für einen Ackerschlepper als Antrieb 7 vorgesehen sein.

Dem Bearbeitungswerkzeug 2 ist außerdem ein Trog 8 zugeordnet, in dem sich ein zu bearbeitendes Holzstück 9 befindet. Um das Holzstück 9 im Trog 8 zu fixieren, ist ein Holzhalter 10 vorgesehen, der an seiner unteren Stirnseite Zacken 11 aufweist. Diese Zacken 11 erfassen das Holzstück 9 und fixieren es im Trog 8. Der Holzhalter 10 ist als Trennwand 12 ausgebildet, um einer Bedienungsperson den Zugriff auf das Bearbeitungswerkzeug 2 in der Bearbeitungsstellung gemäß Figur 3 zu verwehren. Zu diesem Zweck ist die Trennwand 12 derart ausgebildet, dass sie einen Freiraum 13 des Troges 8 möglichst ausfüllt. Damit ist es nicht mehr möglich, einen Arm durch diesen Freiraum 13 hindurch zu stecken. Das Hindurchstecken von einem oder mehreren Fingern durch diesen Freiraum 13 ist zwar grundsätzlich möglich, aufgrund des gewählten Abstandes des Holzhalters 10 vom Bearbeitungswerkzeug 2 erlaubt es allerdings nicht, in diesem Fall das Bearbeitungswerkzeug 2 zu berühren.

Der Holzhalter 10 ist um eine Holzhalter-Schwenkachse 14 mittels eines Schwenkhebels 15 zwischen einer in der Figur 1 dargestellten Beladestellung und einer in den Figuren 2 und 3 dargestellten Fixierstellung verschwenkbar. In der Beladestellung gemäß Figur 1 ist der Holzhalter 10 so weit aus dem Trog 8 zurück gezogen, dass das Holzstück 9 problemlos in den Trog 8 eingelegt werden kann.

Um sicherzustellen, dass der Holzhalter 10 in die Fixierstellung verstellt wird, wenn das Bearbeitungswerkzeug 2 die in Figur 1 dargestellte Passivstellung verlässt, ist der Hebel 4 mit dem Schwenkhebel 15 über eine Feder 16 verbunden. Diese Feder 16 ist lediglich beispielhaft als Gasfeder ausgebildet. Eine Schwenkbewegung des Hebels 4 wird daher über die Feder 16 auf den Schwenkhebel 15 und damit auf den Holzhalter 10 übertragen. Bei jeder Betätigung des Hebels 4 ist damit sichergestellt, dass auch der Holzhalter 10 in die Fixierstellung gemäß Figur 2 überführt wird. Durch die federnde Kopplung zwischen dem Hebel 4 und dem Schwenkhebel 15 ist außerdem gewährleistet, dass der Hebel 4 bis zur Bearbeitungsstellung gemäß Figur 3 verschwenkt werden kann, auch wenn der Holzhalter 10 längst aufgrund seines Kontakts mit dem Holzstück 9 unbeweglich ist. Die weitere Schwenkbewegung wird in diesem Fall von der Feder 16 aufgenommen.

Im Folgenden wird der Bearbeitungsvorgang anhand der Figuren 1 bis 3 näher erläutert.

Zunächst befindet sich das Bearbeitungswerkzeug 2 gemäß Figur 1 in der Passivstellung und der Holzhalter 10 in der Beladestellung. In dieser Stellung geht vom Bearbeitungswerkzeug 2 keinerlei Gefahr aus, da es vollständig in das Schutzgehäuse 3 zurückgezogen ist. Der Trog 8 kann problemlos mit dem Holzstück 9 beladen werden.

Anschließend wird der Hebel 4 im Uhrzeigersinn verschwenkt, so dass er die Stellung gemäß Figur 2 erreicht. In dieser Stellung ist das Bearbeitungswerkzeug 2 noch immer vollständig im Schutzgehäuse 3 angeordnet, so dass es sich nach wie vor in der Passivstellung befindet. Die Feder 16 hat dabei die Bewegung des Hebels 4 auf den Schwenkhebel 15 übertragen und den Holzhalter 10 in die in Figur 2 dargestellte Fixierstellung überführt. In dieser Fixierstellung ist das Holzstück 9 zwischen den Zacken 11 des Holzhalters 10 und dem Trog 8 arretiert. Zusätzlich ist der Trog 8 so weit durch die Trennwand 12 des Holzhalters 10 abgedeckt, dass ein Zugriff auf das Bearbeitungswerkzeug 2 über den Trog 8 nicht mehr möglich ist.

Im Folgenden wird nun der Hebel 4 weiterverschwenkt, so dass das Bearbeitungswerkzeug 2 die Passivstellung gemäß Figur 2 verlässt und in den Trog 8 sowie das Holzstück 9 eindringt. Dabei wird die Feder 16 komprimiert, so dass der Holzhalter 10 mit der Kraft der Feder 16 gegen das Holzstück 9 gedrückt wird. In dieser Bearbeitungsstellung des Bearbeitungswerkzeugs 2 gemäß Figur 3 geht vom Bearbeitungswerkzeug 2 keinerlei Gefahr für Personen aus, da der einzig mögliche Zugriff über den Trog 8 durch die Trennwand 12 versperrt ist.

Nach dem Abschluss des Bearbeitungsvorgangs gemäß Figur 3 wird der Hebel 4 zurückgezogen. Dabei bleibt der Holzhalter 10 in der Fixierstellung, bis das Bearbeitungswerkzeug 2 die in Figur 2 dargestellte Passivstellung erreicht hat. Erst anschließend wird durch weiteres Verschwenken des Hebels 4 entgegen dem Uhrzeigersinn der Holzhalter 10 in die Beladestellung gemäß Figur 1 verschwenkt, so dass der nächste Bearbeitungstakt durchgeführt werden kann.

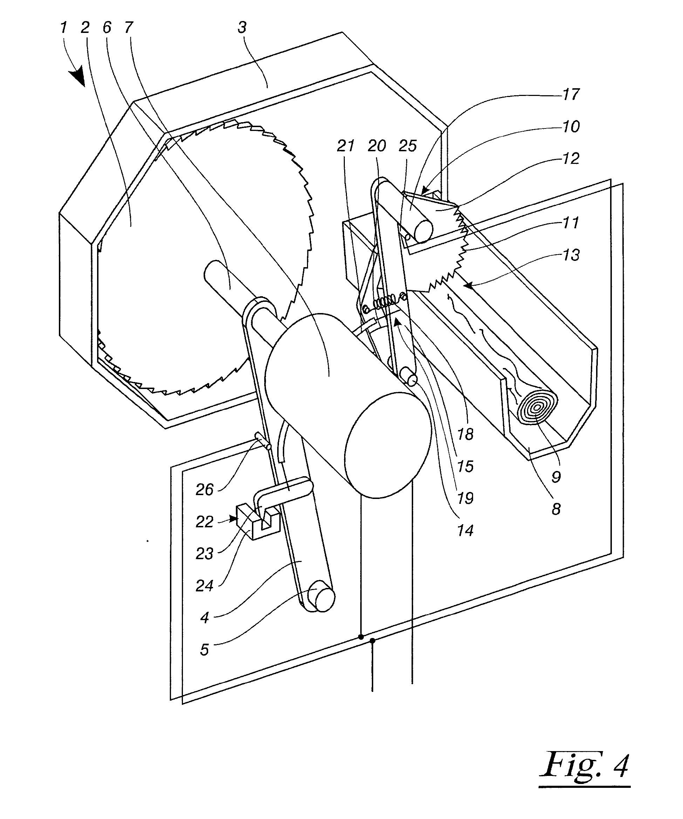

Die Figuren 4 bis 6 zeigen eine alternative Ausführungsform einer Vorrichtung 1 zum Bearbeiten von Holzstücken 9. Dabei bedeuten gleiche Bezugszeichen gleiche Teile. Im Folgenden wird lediglich auf die Unterschiede zur Ausführungsform gemäß den Figuren 1 bis 3 eingegangen.

Bei dieser Ausführungsform entfällt die Kopplung zwischen dem Hebel 4 und dem Schwenkhebel 15 über die Feder 16, so dass das Bearbeitungswerkzeug 2 und der Holzhalter 10 unabhängig voneinander bedienbar sind. Dem Schwenkhebel 15 ist ein um die Holzhalter-Schwenkachse 14 verschwenkbarer Betätigungshebel 17 zugeordnet. Beide sind über eine weitere Feder 18 miteinander elastisch gekoppelt. Diese Anordnung, bestehend aus dem Betätigungshebel 17 und der Kopplung über die weitere Feder 18, ergibt einen Kraftsensor 19. Dabei kann die auf den Holzhalter 10 wirkende Haltekraft als relative Schwenkbewegung zwischen dem Schwenkhebel 15 einerseits und dem Betätigungshebel 17 andererseits abgelesen werden. Dieser Schwenkwinkel 20 wird mittels eines Bowdenzugs 21 abgetastet, der eine Arretierung 22 betätigt. Die Arretierung 22 besteht aus einem am Hebel 4 schwenkbar gelagerten Haken 23, der in ein entsprechend geformtes Widerlager 24 eingreift. Solange der Bowdenzug 21 zurückgezogen ist, zieht dieser den Haken 23 in das Widerlager 24, so dass eine Schwenkbewegung des Hebels 4 unmöglich ist. Damit ist in dieser Stellung - also ohne Krafteinwirkung auf den Holzhalter 10 - eine Verschwenkung des Bearbeitungswerkzeugs 2 in dessen Bearbeitungsstellung unmöglich.

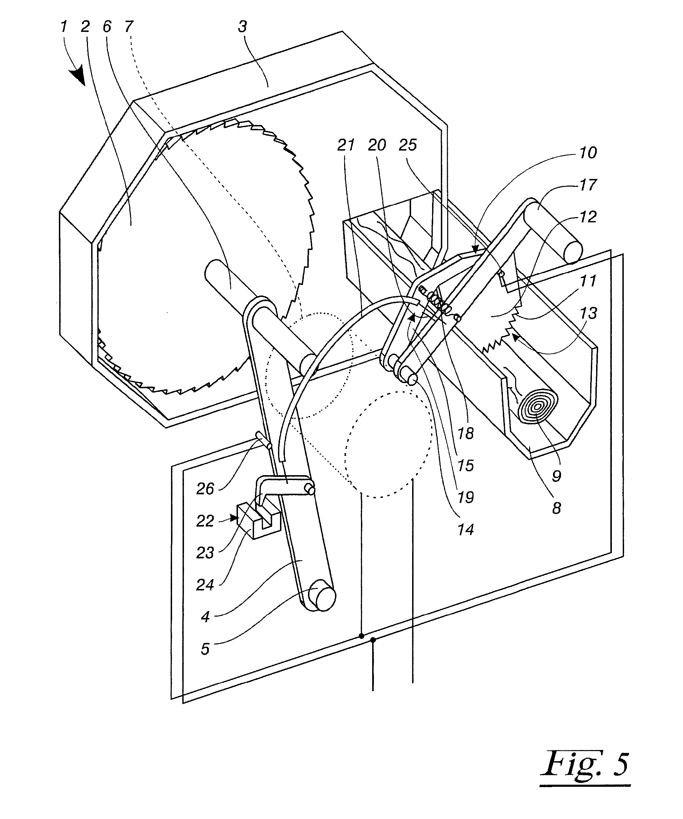

Wird nun der Holzhalter 10 durch Verschwenken des Betätigungshebels 17 im Uhrzeigersinn gegen das Holzstück 9 gedrückt, so wird die weitere Feder 18 gedehnt, wobei sich der Schwenkwinkel 20 zwischen dem Betätigungshebel 17 und dem Schwenkhebel 15 verringert. Dabei wird der Bowdenzug 21 betätigt, so dass er den Haken 23 aus dem Widerlager 24 löst. Diese Situation ist in Figur 5 dargestellt.

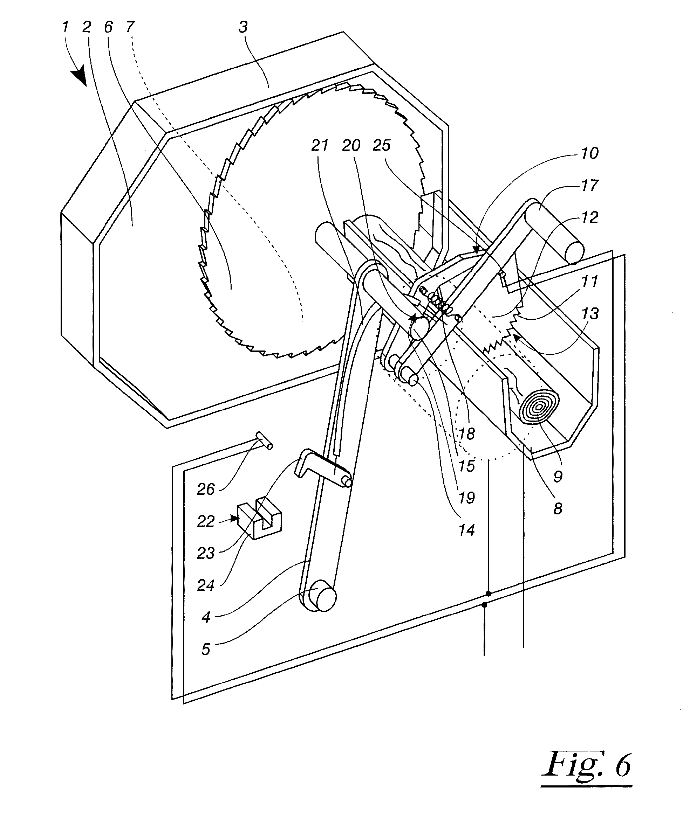

Nun kann der Hebel 4 im Uhrzeigersinn verschwenkt werden, da dessen Arretierung aufgehoben ist. Damit kann das Bearbeitungswerkzeug 2 in die in Figur 6 dargestellte Bearbeitungsstellung überführt werden.

Um zusätzlich zu verhindern, dass der Holzhalter 10 während der Bearbeitung des Holzstücks 9 durch das Bearbeitungswerkzeug 2 losgelassen wird, ist am Holzhalter 10 ein Schalter 25 vorgesehen. Außerdem ist am Hebel 4 ein weiterer Schalter 26 vorgesehen, der die Passivstellung des Bearbeitungswerkzeugs 2 erfasst. Beide Schalter 25, 26 sind elektrisch parallel geschaltet und zusammen in Reihe zum Antrieb 7. Dies gewährleistet, dass der Antrieb 7 nur dann das Bearbeitungswerkzeug 2 antreiben kann, wenn der Holzhalter 10 mit ausreichender Kraft auf den Betätigungshebel 17 gegen das Holzstück 9 drückt und/oder sich das Bearbeitungswerkzeug 2 in der Passivstellung befindet. Sobald das Bearbeitungswerkzeug 2 die Passivstellung verlässt und der Holzhalter 10 nicht mehr ausreichend gegen das Holzstück 9 gedrückt wird, schaltet der Antrieb 7 des Bearbeitungswerkzeugs 2 ab. Damit ist auch für diesen Fall eine ausreichende Sicherheit gewährleistet.

### Bezugszeichenliste

- 1: Vorrichtung
- 2: Bearbeitungswerkzeug
- 3: Schutzgehäuse
- 4: Hebel
- 5: Säge-Schwenkachse
- 6: Welle
- 7: Antrieb
- 8: Trog
- 9: Holzstück
- 10: Holzhalter
- 11: Zacke
- 12: Trennwand
- 13: Freiraum
- 14: Holzhalter-Schwenkachse
- 15: Schwenkhebel
- 16: Feder
- 17: Betätigungshebel
- 18: Feder
- 19: Kraftsensor
- 20: Schwenkwinkel
- 21: Bowdenzug
- 22: Arretierung
- 23: Haken
- 24: Widerlager
- 25: Schalter
- 26: Schalter

## Patentansprüche

1. Vorrichtung zum Bearbeiten von Holzstücken (9), insbesondere von Brennholzstücken, wobei die Vorrichtung (1) mindestens ein Schutzgehäuse (3), mindestens ein motorisch angetriebenes Bearbeitungswerkzeug (2) und mindestens einen Trog (8) zur Aufnahme der Holzstücke (9) aufweist, wobei dem mindestens einen Trog (8) mindestens ein Holzhalter (10) zugeordnet ist, der zwischen einer den mindestens einen Trog (8) freigebenden Beladestellung und einer das Holzstück (9) im mindestens einen Trog (8) arretierenden Fixierstellung verstellbar ist, und das mindestens eine Bearbeitungswerkzeug (2) zwischen einer in das mindestens eine Schutzgehäuse (3) zurückgezogenen Passivstellung und einer in den mindestens einen Trog (8) wenigstens teilweise eingreifenden Bearbeitungsstellung relativ zu mindestens einen Trog (8) verstellbar ist, **dadurch gekennzeichnet, dass** der mindestens eine Holzhalter (10) mindestens eine in der Fixierstellung zwischen einer Bedienungsperson und dem mindesten einen Bearbeitungswerkzeug (2) vorgesehene Trennwand (12) aufweist, wobei das mindestens eine Bearbeitungswerkzeug (2) mit dem mindestens einen Holzhalter (10) in Wirkverbindung steht.

2. Vorrichtung nach Anspruch 1, **dadurch gekennzeichnet, dass** der mindestens eine Holzhalter (10) mit dem mindestens einen Bearbeitungswerkzeug (2) derart in Wirkverbindung steht, dass eine Verstellung des mindestens einen angetriebenen Bearbeitungswerkzeugs (2) in die Bearbeitungsstellung und/oder ein Antrieb (7) des mindestens einen Bearbeitungswerkzeugs (2) nur möglich ist, wenn sich der mindestens eine Holzhalter (10) in der Fixierstellung befindet.

3. Vorrichtung nach Anspruch 1 oder 2, **dadurch gekennzeichnet, dass** der mindestens eine Holzhalter (10) und/oder das mindestens eine Bearbeitungswerkzeug (2) mit mindestens einem Lagesensor in Wirkverbindung steht, der die Lage des mindestens einen Holzhalters (10) und/oder das mindestens eine Bearbeitungswerkzeug (2) erfasst.

4. Vorrichtung nach mindestens einem der Ansprüche 1 bis 3, **dadurch gekennzeichnet, dass** der mindestens eine Holzhalter (10) mit mindestens einem Kraftsensor (19) in Wirkverbindung steht, der eine Haltekraft des mindestens einen Holzhalters (10) am Holzstück (9) erfasst.

5. Vorrichtung nach Anspruch 4, **dadurch gekennzeichnet, dass** der mindestens eine Holzhalter (10) mindestens eine Feder (18) aufweist, über die mindestens ein Betätigungshebel (17) mit dem Holzhalter (10) gekoppelt ist, so dass beide eine beschränkte Relativbewegung ausführen können, die von mindestens einem Lagesensor erfasst wird, der den Kraftsensor (19) realisiert.

6. Vorrichtung nach mindestens einem der Ansprüche 3 bis 5, **dadurch gekennzeichnet, dass** der mindestens eine Lage- und/oder Kraftsensor (19) über mindestens einen Schalter (25) mit dem Antrieb (7) des mindestens einen Bearbeitungswerkzeugs (2) in Wirkverbindung steht.

7. Vorrichtung nach mindestens einem der Ansprüche 3 bis 6, **dadurch gekennzeichnet, dass** der Lage- und/oder Kraftsensor (19) mit mindestens einer Arretierung (22) in Wirkverbindung steht, die das mindestens eine Bearbeitungswerkzeug (2) in der Passivstellung verriegelt.

8. Vorrichtung nach mindestens einem der Ansprüche 1 bis 7, **dadurch gekennzeichnet, dass** das mindestens eine Bearbeitungswerkzeug (2) mit dem mindestens einen Holzhalter (10) derart in Wirkverbindung steht, dass der mindestens eine Holzhalter (10) beim Verstellen des mindestens einen Bearbeitungswerkzeugs (2) in die Bearbeitungsstellung zwangsweise in die Fixierstellung gebracht wird.

9. Vorrichtung nach Anspruch 7, **dadurch gekennzeichnet, dass** das mindestens eine Bearbeitungswerkzeug (2) und/oder der mindestens eine Trog (8) mit dem mindestens einen Holzhalter (10) über mindestens eine Feder (16) gekoppelt ist/sind.

10. Vorrichtung nach Anspruch 8, **dadurch gekennzeichnet, dass** die mindestens eine Feder (16) als Gasfeder ausgebildet ist.

11. Vorrichtung nach mindestens einem der Ansprüche 7 bis 10, **dadurch gekennzeichnet, dass** der mindestens eine Holzhalter (10) in die Fixierstellung verstellt ist, bevor das mindestens eine Bearbeitungswerkzeug (2) das mindestens eine Schutzgehäuse (3) verlassen hat.
